# EUROPÄISCHE PATENTSCHRIFT

(11) **EP 3 422 087 B1**
(45) Veröffentlichungstag und Bekanntmachung des Hinweises auf die Patenterteilung: **25.12.2019**
(21) Anmeldenummer: 17178326.9
(22) Anmeldetag: 28.06.2017
(51) Int. Cl.: G02C 13/00

(54) **VERFAHREN ZUR KORREKTUR VON ZENTRIERPARAMETERN UND/ODER EINER ACHSLAGE SOWIE ENTSPRECHENDES COMPUTERPROGRAMM UND VERFAHREN**
METHOD FOR CORRECTING CENTRING PARAMETERS AND/OR AN AXIS POSITION AND CORRESPONDING COMPUTER PROGRAMME AND METHOD
PROCÉDÉ DE CORRECTION DE PARAMÈTRES DE CENTRAGE ET/OU D'UNE POSITION D'AXE ET PROGRAMME INFORMATIQUE CORRESPONDANT ET PROCÉDÉ

(43) Veröffentlichungstag der Anmeldung: 02.01.2019
(73) Patentinhaber: Carl Zeiss Vision International GmbH, 73430 Aalen (DE)
(72) Erfinder: GAMPERLING, Michael, 89340 Leipheim (DE); BREUNINGER, Tobias, 89542 Herbrechtingen (DE); CABEZA-GUILLÉN, Jesús-Miguel, 73434 Aalen (DE)
(74) Vertreter: Sticht, Andreas

(56) Entgegenhaltungen:
- EP-B2- 1 844 363
- DE-A1-102004 063 160
- DE-A1-102008 018 198
- DE-A1-102009 025 215
- US-A1- 2006 044 509
- US-A1- 2007 035 697

## Beschreibung

Die vorliegende Anmeldung betrifft Verfahren zur Korrektur von Zentrierparametern und/oder einer Achslage auf Basis einer habituellen Kopfhaltung einer Person, ein entsprechendes Computerprogramm sowie eine entsprechende Vorrichtung.

Zentrierparameter sind Parameter, welche benötigt werden, um Brillengläser korrekt in einer Brillenfassung anzuordnen, d.h. zu zentrieren, sodass die Brillengläser in korrekter Position relativ zu den Augen der Person getragen werden.

Beispiele für derartige Zentrierparameter umfassen den Pupillenabstand, den HornhautScheitelabstand, den Fassungsscheibenwinkel, die y-Koordinaten der linken und rechten Zentrierpunkte (auch als Durchblickshöhe bezeichnet) den Fern-Durchblickpunkt, den pantoskopischen Winkel (manchmal auch als Vorneigungswinkel bezeichnet) sowie weitere in dem Abschnitt 5 der Norm DIN EN ISO 13666:2012 definierte Parameter sowie u.a. die Inklination der Fassung.

Die Inklination gibt einen Winkel zwischen der Ebene der Brillenbügel und der Fassungsebene an. Sie hängt mit dem pantoskopischen Winkel zusammen, ist im Gegensatz zu diesem jedoch unabhängig von der Trageposition der Brille am Kopf.

Diese Zentrierparameter werden heutzutage automatisch oder halbautomatisch mithilfe entsprechender Systeme bestimmt. Ein Beispiel für ein derartiges System ist in der EP 1 844 363 B2 beschrieben. In dieser Druckschrift wird ein Paar von Bildaufnahmeeinrichtungen verwendet, um Stereobilddaten von einem Kopf einer Person oder Teilen des Kopfes zu erzeugen. Aus den Stereobilddaten wird dann ein dreidimensionales Modell des Kopfes berechnet. Auf Basis des dreidimensionalen Modells können gewünschte Zentrierparameter bestimmt werden. Weitere Vorrichtungen zur Bestimmung von Zentrierparametern sind aus der US 2007/035697 A1 oder der US 2006/0044509 A1 bekannt.

Die Zentrierparameter hängen von einer habituellen Kopfhaltung der Person bei Gebrauch der Brille ab. Beispielsweise führt eine stärkere Kopfneigung einer Person zu einem höheren Fern-Durchblick als ein aufrechterer gehaltener Kopf. Die habituelle Kopfhaltung ist dabei diejenige Kopfhaltung, die die Person üblicherweise bzw. gewohnheitsmäßig beim Tragen der Brille einnimmt.

Daher ist es bei der Bestimmung der Zentrierparameter wichtig, dass die Person ihre habituelle Kopfhaltung einnimmt. Bei Verwendung älterer Systeme zur Zentrierparameterbestimmung ist der Abstand der Person zu deren Bildaufnahmeeinrichtungen vergleichsweise groß, beispielsweise größer als 4 m, was die Einnahme einer natürlichen Haltung erleichtert und zudem sicherstellt, dass die Person ihren Blick nicht auf nahegelegene Punkte fixiert. Ein derart großer Abstand zu den Bildaufnahmeeinrichtungen ist jedoch heute nicht mehr erwünscht, um die Bestimmung der Zentrierparameter auch mit kleinerem Raumbedarf durchführen zu können. Es gibt mittlerweile sogar handgehaltene Systeme zur Bestimmung der Zentrierparameter, bei welchen bedingt durch große Bildwinkel der in derartige Systeme eingebauten Kameras der Abstand zu der Person sehr klein sein muss, um eine ausreichende Auflösung des Gesichts im Bild sicherzustellen (beispielsweise im Bereich von 30 cm). Auch bei Standgeräten wird aktuell mit Abständen von 1 m oder weniger gearbeitet.

Bei einer von der Anmelderin neu entwickelten Vorrichtung sind zur Bestimmung von Zentrierparametern eine Vielzahl von Kameras in einem Abstand von etwa 25 cm bogenförmig rund um den Kopf der Person angeordnet. Diese Vorrichtung ist in EP A 3355100 beschrieben. Hier umringt die Kameraanordnung den Kopf der zu untersuchenden Person also sogar.

Diese Nähe der Kameras zu der zu untersuchenden Person und deren Kopf führt bei vielen Personen zu einer unnatürlichen Kopfhaltung, insbesondere eine aufrechtere Kopfhaltung ("Habachtstellung"). In einer solchen Stellung ermittelte Zentrierparameter unterscheiden sich von Zentrierparametern, die für die habituelle Kopfhaltung der Person angemessen wären.

Um dieses Problem zu lösen, existieren verschiedene Ansätze. Die DE 10 2004 063 160 A1 offenbart beispielsweise ein Verfahren, bei welchem ein Winkel, um den der Kopf ausgehend von einer aufrechten Haltung nach vorne geneigt ist, über mehrere Bildaufnahmen erfasst wird. Aus den mehreren Bildaufnahmen wird eine Kopfhaltung bestimmt.

Die DE 10 2008 018 198 A1 beschreibt die Messung der habituellen Kopfhaltung durch Aufnahmen während eines längeren Zeitraums vor der Zentriermessung. Diese durch Analyse bestimmte habituelle Kopfhaltung kann dann mit derjenigen zum Zeitpunkt des Erstellens von Bildaufnahmen zur Bestimmung der Zentrierparameter verglichen werden, und eine Korrektur von Zentrierparametern kann dann vorgenommen werden.

Ein ähnliches Verfahren ist auch in der DE 10 2009 025 215 A1 offenbart . Hier wird ebenfalls eine Kopfhaltung einer Person fortlaufend gemessen, um eine habituelle Kopfhaltung zu bestimmen, und Zentrierparameter werden dann auf Basis der so ermittelten habituellen Kopfhaltung bestimmt. Sowohl in der DE 10 2008 018 198 A1 als auch in der DE 10 2009 025 215 A1 muss die Kopfhaltung also über einen längeren Zeitraum beobachtet und ausgewertet werden.

Die WO2010097161A1 offenbart ein Verfahren zur Bestimmung der Augendrehpunktlage, bei dem eine Referenzstruktur eines Auges in zwei Messsituationen erfasst wird und dann eine Verdrehung des Auges zwischen den Messsituationen bei einer Verordnung eines Brillenglases berücksichtigt wird. Insbesondere können hier Unterschiede einer Blickrichtung bei einer Refraktionsmessung mit einem Phoropter und einer Zentriermessung berücksichtigt werden.

Bei dem in dem Dokument "i.terminal 2 quick guide" https://www.zeiss.com/content/dam/Vision/Vision/International/Pdf/en/dti/EN_20_070_7300I_Q G_i-Terminal-2_31-03-15.pdf, Stand 31.03.2015, beschriebenen Gerät erfolgt eine Korrektur einer in Bildaufnahmen zur Zentrierparameterbestimmung festgehaltenen Kopfhaltung hin zu einer vorab definierten Kopfhaltung durch Eingabe eines Sollwinkels. Diese Korrektur ist recht abstrakt und bedarf großer Erfahrung, da nur Zahlenwerte vorgegeben werden. Die Art der Korrektur und Bestimmung der habituellen Kopfhaltung ist vergleichsweise zeitaufwändig und teilweise schwierig zu handhaben, da zusätzliche Messungen durchgeführt werden, die auch ausgewertet werden müssen.

Eine andere von Optikern oft auf Basis von Erfahrung angewandte Herangehensweise ist ein manuelles Verschieben einer nach Abschnitt 7.2 der DIN EN ISO 8980-2:2004 in Form einer Stempelfigur aufgebrachten Markierung. Diese Stempelfigur gibt auf Brillengläsern Informationen an, wie eine Markierung zur Ausrichtung, eine Markierung für den Fernbezugspunkt, eine Markierung für den Nahbezugspunkt, eine Markierung für den Anpasspunkt und eine Markierung für den Prismenbezugspunkt. Eine Verschiebung dieser Stempelfigur in vertikaler Richtung entspricht einer Änderung der Kopfhaltung bei gleichzeitig festgehaltener Blickrichtung, oder eine Änderung der Blickrichtung bei fester Kopfhaltung. Ähnlich ist die Situation beim Verschieben der Nahzone. Auch hier wird durch das Verschieben implizit die Kopfneigung beim Lesen verändert. Diese Herangehensweise benötigt große Erfahrung, da es nicht möglich ist, auf intuitive Weise zu beurteilen, wie weit die Verschiebung der Stempelfigur tatsächlich zu einer bestimmten Kopfhaltung passt.

Ein verwandtes Problem tritt z.B. bei der Bestimmung der sphärozylindrischen Refraktion einer Person mittels eines Phoropters oder Autorefraktors auf. Die bei der sphärozylindrischen Refraktion ermittelten Werte geben die Fehlsichtigkeit einer Person an und werden für jedes Auge gemäß DIN EN ISO 13666:2012 als Sphäre (11.2 dieser Norm), Zylinder (12.5 dieser Norm) und Achslage (12.6 dieser Norm) angegeben. Phoropter oder Autorefraktor sind herkömmliche Geräte zum Bestimmen dieser Werte.

Bei diesen Geräten wird der Kopf der zu untersuchenden Person in einer aufrechten Haltung positioniert, und die Werte Zylinder, Achslage und Sphäre werden bestimmt. Diese Werte sind jedoch nur dann genau passend, wenn die Person im Gebrauch ihre Brille auch in der vorgesehenen Anordnung vor dem Auge und mit der vorgesehenen Kopfhaltung trägt. Wird die Brillenfassung jedoch aus kosmetischen, anatomischen oder anderen Gründen im Gebrauch geneigt oder neigt die Person ihren Kopf gewohnheitsmäßig zur Seite, passen die ermittelten Werte nicht genau.

Ausgehend von dem in der DE 10 2008 018 198 A1 oder in der DE 10 2009 025 215 A1 beschriebenen Verfahren besteht die Aufgabe der vorliegenden Erfindung darin, eine einfache, schnelle und intuitive Möglichkeit bereitzustellen, Abweichungen bei Brillenparametern wie Zentrierparametern oder einer Achslage, welche sich aus einer im Vergleich zu einer Messung der Zentrierparameter oder Achslage veränderten Kopfhaltung oder Brillenposition im normalen Gebrauch ergeben, zu korrigieren.

Erfindungsgemäß wird hierzu ein computerimplementiertes Verfahren nach Anspruch 1, ein Computerprogramm nach Anspruch 10, ein Computer nach Anspruch 11 sowie eine Vorrichtung nach Anspruch 12 bereitgestellt. Die Unteransprüche definieren weitere Ausführungsformen.

Erfindungsgemäß wird ein computerimplementiertes Verfahren zur Korrektur von Zentrierparametern oder einer Achslage bereitgestellt, umfassend:
- Darstellen einer Repräsentation des Kopfs in einer Kopfhaltung oder einer Repräsentation des Kopfs mit einer Brillenfassung in einer Brillenfassungsausrichtung, und
- Korrigieren des Brillenparameters auf Basis einer korrigierten Kopfhaltung und/oder auf Basis einer korrigierten Brillenfassungsausrichtung,
dadurch gekennzeichnet, dass die korrigierte Kopfhaltung und/oder die korrigierte Brillenfassungsausrichtung bestimmt wird durch:
- zumindest teilweise manuelles Korrigieren der Kopfhaltung in der dargestellten Repräsentation des Kopfs und/oder der Brillenfassungsausrichtung in der dargestellten Repräsentation des Kopfs mit der Brillenfassung, und dadurch, dass der Brillenparameter eine Achslage einer sphärozylindrischen Refraktion umfasst.

Durch die Repräsentation des Kopfs kann dabei ein intuitives und einfaches Korrigieren der Kopfhaltung oder der Brillenposition ermöglicht werden, insbesondere ein manuelles Korrigieren durch einen Benutzer wie einen Optiker. In anderen Worten wird bei dem erfindungsgemäßen Verfahren gegenüber dem Stand der Technik mit der Repräsentation des Kopfes ein visuelles Hilfsmittel bereitgestellt, um das Korrigieren auf intuitive und einfache Weise ganz oder teilweise manuell durchführen zu können. "Manuell" bedeutet dabei, dass ein Benutzer entsprechende Eingaben vornimmt. Teilweise manuell ist das Verfahren dann, wenn zwar Eingaben zur Korrektur erfolgen, die Korrektur aber auch teilweise automatisch abläuft. Derartige Eingaben können beispielsweise ein Markieren von Punkten oder Bereichen in der dargestellten Kopfrepräsentation, ein Eingeben von Zahlenwerten oder ein Bewegen der dargestellten Kopfrepräsentation oder anderer dargestellter Elemente umfassen, wie später noch näher erläutert werden wird.

Unter "Person" wird im Folgenden diejenige Person verstanden, welcher eine Brille angepasst wird. "Benutzer" bezeichnet jemanden, der das Verfahren benutzt, um die Brillenanpassung vorzunehmen, typischerweise ein Optiker.

Unter einem Brillenparameter ist jegliche Art von Parameter zu verstehen, der eine Brille (inkl. Brillenfassung und Brillenglas) beschreibt und/oder zur Anpassung der Brille an eine Person benötigt wird. Beispiele für Brillenparameter umfassen Zentrierparameter oder die sphärozylindrische Refraktion für die Brillengläser, wobei der Brillenparameter erfindungsgemäß eine Achslage der sphärozyklischen Refraktion umfasst.

Unter einer Repräsentation des Kopfs ist im Rahmen der vorliegenden Anmeldung eine zweidimensionale oder dreidimensionale Darstellung eines Kopfes oder Teils hiervon zu verstehen. Eine dreidimensionale Darstellung ist eine Darstellung, die bei einem Betrachter einen räumlichen Eindruck hervorruft, beispielsweise durch eine entsprechende perspektivische Darstellung. Eine zweidimensionale Darstellung kann beispielsweise eine schematische Strichzeichnung sein.

Die Repräsentation des Kopfs wird dem Benutzer zur Anzeige gebracht. Die Anzeige kann in mannigfacher Form erfolgen. Z.B. kann die Anzeige auf einem Bildschirm oder Display erfolgen. Es ist auch eine Projektion z.B. auf eine Wand möglich.

Eine derartige Repräsentation des Kopfs kann vergleichsweise realistisch auf Basis von einem oder mehreren Bildern der Person, an welche eine Brille angepasst wird, erstellt werden, oder kann auch eine eher schematische Strichzeichnung sein, solange die Position des Kopfes und/oder einer Brillenfassung auf dem Kopf klar erkennbar ist. Eine dreidimensionale Darstellung kann beispielsweise als Avatar, also als ein grafischer Stellvertreter einer echten Person, erfolgen. Bei einer derartigen dreidimensionalen Darstellung einer 3D-KopfRepräsentation umfasst das Korrigieren der Kopfhaltung dann ein Ausrichten der dargestellten 3D-Repräsentation. In diesem Fall kann der Benutzer wählen, aus welcher Blickrichtung die 3D-Darstellung angezeigt wird, was den Vorteil hat, dass ein Benutzer, beispielsweise ein Optiker, die für ihn angenehmste Ansicht wählen kann.

Bei anderen Ausführungsbeispielen werden eine Seitenansicht oder zwei Seitenansichten (von links und rechts) des Kopfes dargestellt, wobei auf einer Seitenansicht eine vertikale Kopfneigung eines Kopfes am einfachsten und intuitivsten erkennbar ist. Die Repräsentation des Kopfs stellt dabei den Kopf dar, wie er bei einer Zentriermessung und/oder Refraktionsmessung gehalten wurde. Eine derartige Repräsentation des Kopfs kann beispielsweise auf Basis von Bildern erstellt sein, wie sie bei der Bestimmung der Zentrierparameter gemäß der oben erwähnten Anmeldung europäischen Patentanmeldung 17153556.0 aufgenommen werden. So wird zunächst die Haltung des Kopfes dargestellt, wie sie bestimmten Zentrierparametern und/oder Refraktionswerten zugrunde liegt. Ausgehend von dieser Haltung erfolgt dann die Korrektur. So kann von dem Bediener einfach erkannt werden, ob diese zunächst dargestellte Haltung einer von dem Benutzer beobachteten habituellen Kopfhaltung der Person entspricht.

Unter einer Brillenfassungsausrichtung ist dabei eine Lage der Brillenfassung verglichen mit einer Lage, in welcher die Brille waagerecht am bei aufrechter Kopfhaltung am Kopf getragen wird, zu verstehen und demnach die Fern-Durchblickpunkte für das rechte und linke Auge an den vorgesehenen Positionen zum jeweiligen Auge angeordnet sind, d.h. Positionen, welche sich aus einer Zentriermessung vor dem Korrigieren ergeben. Die Brillenfassungsausrichtung kann als Richtung der Fassungshorizontalen angegeben werden. Die Fassungshorizontale entspricht einer horizontalen Richtung der Brillenfassung und kann beispielsweise durch eine Tangente an einem oberen Fassungsrand der Brillenfassung gegeben sein.

Bei einer Ausführungsform ist eine habituelle Kopfhaltung, insbesondere eine vertikale Kopfneigung, von einem Benutzer mithilfe der angezeigten Repräsentation des Kopfs einstellbar. Die vertikale Kopfneigung bezeichnet dabei einen Neigungswinkel, um welchen der Kopf ausgehend von einer aufrechten Kopfhaltung nach vorne geneigt ist. Hierfür gibt es mehrere Möglichkeiten, welche alle eine intuitive Einstellmöglichkeit bieten.

Bei einer ersten Variante wird eine Eingabemöglichkeit bereitgestellt, über welche der Benutzer die angezeigte Repräsentation des Kopfs, insbesondere die oben erwähnte Seitenansicht, direkt auf eine gewünschte Kopfhaltung bewegen kann. Die so eingestellte Kopfhaltung wird dann z.B. als habituelle Kopfhaltung angenommen und zur Korrektur der Zentrierparameter verwendet. Der Benutzer, beispielsweise ein Optiker, kann auf diese Weise einfach die Kopfneigung entsprechend einer zuvor beobachteten habituellen Kopfhaltung der Person einstellen.

Bei einer anderen Ausführungsform kann direkt eine vertikale Kopfneigung eingegeben werden, und die angezeigte Repräsentation des Kopfs wird entsprechend dem eingegebenen Neigungswinkel geändert. Auch so kann intuitiv beurteilt werden, ob der eingegebene Neigungswinkel tatsächlich dem Neigungswinkel bei der gewünschten also z.B. habitueller Kopfhaltung der Person übereinstimmt.

Bei einer anderen Ausführungsform wird eine Frontdarstellung des Kopfes zusammen mit Lagen der Fern-Durchblickpunkte (und optional auch der Nah-Durchblickpunkte), beispielsweise in Form einer Stempelfigur, eingeblendet. Die Lage der Fern-Durchblickpunkte, Nah-Durchblickpunkte und/oder Stempelfigur kann dann manuell verändert werden. Bei dieser Veränderung wird dann gleichzeitig eine Seitenansicht des Kopfes um eine entsprechende vertikale Kopfneigung gekippt, sodass hier wiederum eine intuitive Einstellung möglich ist, indem der Benutzer die Seitenansicht mit der gewünschten also z.B. einer tatsächlichen, insbesondere habituellen Kopfhaltung der Person, welche der Benutzer beobachtet, in Einklang gebracht.

Neben der vertikalen Kopfneigung kann auf entsprechende Weise auch eine seitliche Kopfneigung dargestellt werden. Unter seitlicher Kopfneigung versteht man eine Kopfneigung in Richtung der Ohren, also in der Frontansicht nach rechts oder links. Dies kann insbesondere bei einer dreidimensionalen Darstellung oder auf Basis einer Frontansicht in der angezeigten Repräsentation des Kopfs erfolgen. Dazu kann die Frontansicht mit Brillenfassung dargestellt werden, und die Brillenfassungsausrichtung kann als Fassungshorizontale markiert werden. Auf Basis der Neigung der Fassungshorizontalen gegenüber einer horizontalen Richtung der dargestellten Repräsentation des Kopfes kann dann die Achslage korrigiert werden, was nun kurz erläutert werden wird.

Der zugrunde liegende Sachverhalt ist der, dass bei einer leichten Seitenneigung des Kopfes die Augäpfel gegenläufig um die Achse der Blickrichtung in der Augenhöhle "rollen", also ihre Ausrichtung in Bezug auf eine vertikale Richtung im Raum beibehalten.

Bei der Bestimmung der sphärozyklischen Refraktion wird wie eingangs erläutert der Kopf der Person in einer aufrechten Haltung positioniert. Bei Einbau der Gläser in die Brillenfassung orientiert sich ein Optiker üblicherweise an der Fassungshorizontalen der Brillenfassung. Wenn die Person den Kopf mit der aufgesetzten Brille bei habitueller Kopfhaltung nicht aufrecht, sondern zur Seite geneigt hält, dann wird auch die Brille zur Seite geneigt sein. Da die Augen die Seitenneigung des Kopfes wie oben erläutert zumindest bei kleineren Seitenneigungen ausgleichen, sind die Gläser in Bezug auf die horizontale Richtung der Augen verdreht. Im Ergebnis bedeutet dies, dass die Achse der zylindrischen Korrektur der Brillengläser jetzt um den Winkel der Seitenneigung gegenüber der Refraktionssituation verdreht ist.

Um diesen Winkel wieder auszugleichen, wird die Achslage dann um einen entsprechenden Winkel korrigiert. Auf diese Weise können also Abweichungen, die sich auf Basis der seitlichen Kopfneigung und damit der Brillenfassungsausrichtung ergeben, kompensiert werden, sodass die Achslage korrekt zum Auge ausgerichtet ist.

Zur Korrektur der Achslage kann also eine Frontansicht des Kopfes als dargestellte Repräsentation des Kopfs verwendet werden und die Kopfseitenneigung bei gewünschter, d.h. z.B. habitueller Kopfhaltung kann wie oben beschrieben eingestellt werden. Unter der Annahme, dass während der Refraktionsmessung in einem Phoropter und/oder Autorefraktor der Winkel der Kopfseitenneigung null ist, kann eine Korrektur der Achslage bestimmt werden, der dem Winkel der Kopfseitenneigung entspricht.

Bei einer alternativen Ausführungsform kann bei einem Autorefraktor während der Autorefraktion ein Bild der Iriden beider Augen erstellt werden, und beim späteren Erstellen von Bildaufnahmen zur Bestimmung der Zentrierparameter werden ebenfalls Bilder der Iris beider Augen aufgezeichnet. Für beide Augen werden die Iriden aus beiden Bildern zueinander registriert, d.h. deren relative Position oder relative Verdrehung der Augen zwischen der Autorefraktion und der Bestimmung der Zentrierparameter zueinander gefunden. Hieraus ergibt sich ebenso eine Korrektur der Achslage um den entsprechenden Winkel der relativen Verdrehung .Die Bilder können auf einfache Weise während der Autorefraktion und der Zentriermessung aufgenommen werden, so dass auf diese Weise der Achskorrekturwinkel ebenfalls einfach eingestellt werden kann. Diese Herangehensweise kann insbesondere auch bei nicht symmetrischen Gesichtern zum Einsatz kommen, bei welchen eine Korrektur mit dem obigen Verfahren auf Basis der Fassungshorizontalen und seitlichen Kopfneigung schwierig sein kann. Diese alternative Ausführungsform kann auch vollautomatisch ohne manuellen Eingriff implementiert werden.

Bei einer weiteren Ausführungsform werden ein oder mehrere Bilder der Person mit einer Bildaufnahmeeinrichtung aufgenommen, wobei sich hierzu die Person nicht zwingend vor einer Vorrichtung zur Zentriermessung befindet, sondern im Wesentlichen beliebig bewegen kann. Zur Aufnahme kann beispielsweise die interne eingebaute Kamera eines Smartphones oder Tablets oder eine speziell hierfür bereitgestellte Kamera verwendet werden. So kann der Kopf der Person in im Wesentlichen habitueller Kopfhaltung aufgenommen werden.

Bei einer Variante werden die so aufgenommenen Bilder zusätzlich zu der dargestellten Repräsentation des Kopfs angezeigt, was dem Benutzer die oben genannte Einstellung erleichtert, da er dann die Kopfhaltung der dargestellten Repräsentation des Kopfs beispielsweise bei einer Bestimmung von Brillenparametern wie bei der Zentriermessung oder der Refraktionsmessung mit der Kopfhaltung in den Bildern unmittelbar vergleichen kann. Dies erleichtert die Einstellung der gewünschten, insbesondere habituellen Kopfhaltung weiter.

Bei einer anderen Ausführungsform werden markante Punkte in den aufgenommenen Bildern oder dem aufgenommenen Bild sowie in der dargestellten Repräsentation des Kopfs gesucht, und durch Vergleichen Winkel ermittelt, um welche die gewünschte, also insbesondere habituelle Kopfneigung gegenüber der Kopfneigung in der dargestellten Repräsentation des Kopfs abweicht. Auf diese Weise kann das Verfahren automatisiert werden.

Die oben erläuterte Korrektur und Einstellung der Repräsentation des Kopfes auf die habituellen Kopfhaltung kann für verschiedene Situationen, beispielsweise beim Blick der Person in die Ferne, beim Arbeiten am Bildschirm, oder beim Lesen einer Zeitschrift durchgeführt werden. Bei der obigen Variante, bei welcher Bilder der Person aufgenommen werden, kann die Person angewiesen werden, entsprechende Tätigkeiten auszuüben, sodass entsprechende Bilder aufgenommen werden können.

Auch eine Verschiebung des Nah-Durchblickpunkts oder des Nahteils der Stempelfigur kann auf eine Veränderung der vertikalen Kopfneigung bzw. der Blickrichtung umgerechnet werden, was dann in der Seitenansicht der dargestellten Repräsentation des Kopfs sichtbar gemacht wird. In anderen Worten entspricht eine Verschiebung des Nah-Durchblickpunktes oder des Nahteils einer geänderten Kopfneigung, was dann entsprechend in der Repräsentation dargestellt wird. Auf Basis dieser Veränderung der vertikalen Kopfneigung kann dann wie bei der direkten Einstellung der vertikalen Kopfneigung mit Hilfe der Repräsentation des Kopfes eine Korrektur der Brillenparameter erfolgen.

Die Korrektur der Zentrierparameter kann dann aufgrund einfacher geometrischer Überlegungen auf Basis der ermittelten gewünschten, d.h. vorzugsweise habituellen Kopfhaltung vorgenommen werden, beispielsweise in der in den Dokumenten DE 10 2008 018 198 A1 oder DE 10 2009 025 215 A1 beschriebenen Art und Weise. Hierzu ist es insbesondere hilfreich, die Lage der Pupillen und des Corneaapex der Augen zu detektieren und den Mittelpunkt (Rotationspunkt) der Augen dann abzuleiten, beispielsweise durch modellhafte Annahmen. Diese können dann zur Korrektur der Blickrichtung vor der Bestimmung der Durchblickpunkte im Brillenglas verwendet werden. Diese Punkte können bei manchen Ausführungsbeispielen auch bei der Bestimmung der Zentrierparameter ohnehin bestimmt werden.

Gemäß einem zweiten Aspekt wird ein Computerprogramm, welches z.B. auf einem Speicher eines Computers abgelegt ist, bereitgestellt, welches einen Programmcode aufweist. Wird der Programmcode auf einem oder mehreren Prozessoren des Computers ausgeführt, wird das Verfahren wie oben beschrieben durchgeführt.

Gemäß einem dritten Aspekt wird ein Computer mit einem Prozessor bereitgestellt, auf dem dieses Computerprogramm läuft, um die oben beschriebenen Verfahren durchzuführen. Das Computerprogramm ist dabei in einem Speicher der Recheneinrichtung gespeichert.

So kann das Verfahren einfach durch entsprechende Programmierung eines Computers implementiert werden.

Gemäß einem vierten Aspekt wird eine Vorrichtung zur Korrektur eines Brillenparameters bereitgestellt, umfassend:
- Anzeigemittel zum Darstellen einer Repräsentation des Kopfs in einer Kopfhaltung oder einer Repräsentation des Kopfs mit einer Brillenfassung in einer Brillenfassungsausrichtung, und
- Korrekturmittel zum Korrigieren des Brillenparameters auf Basis einer korrigierten Kopfhaltung und/oder auf Basis einer korrigierten Brillenfassungsausrichtung, gekennzeichnet durch Eingabemittel zum Bestimmen der korrigierten Kopfhaltung und/oder der korrigierte Brillenfassungsausrichtung durch:
- zumindest teilweises manuelles Korrigieren der Kopfhaltung in der dargestellten Repräsentation des Kopfs und/oder der Brillenfassungsausrichtung in der dargestellten Repräsentation des Kopfs mit der Brillenfassung, und dadurch gekennzeichnet, dass der Brillenparameter eine Achslage einer sphärozylindrischen Refraktion umfasst.

Mittels einer derartigen Vorrichtung kann - ähnlich wie bereits oben für erfindungsgemäße Verfahren erläutert - eine intuitive Korrektur von Brillenparametern vorgenommen werden.

Die Vorrichtung kann zudem eine Bildaufnahmeeinrichtung beinhalten, um Bilder eines Kopfes der Person aufzunehmen, auf deren Basis dann die Repräsentation des Kopfs dargestellt wird.

Die Vorrichtung kann insbesondere eine Vorrichtung zur Bestimmung von Zentrierparametern sein, wobei die Bilder dann Zentrierbilder sein können. So kann eine Vorrichtung zur Bestimmung von Zentrierparametern mit einer Zusatzfunktionalität versehen werden, um eine Korrektur auf Basis der habituellen Kopfhaltung durchzuführen.

Die Kameras können insbesondere eine oder mehrere Seitenkameras zur Durchführung von seitlichen Kopfaufnahmen und eine Frontkamera zur Durchführung von Frontaufnahmen des Kopfes umfassen, um so die oben erläuterten Ansichten des Kopfes als Repräsentation des Kopfs darzustellen. Die Seitenkameras können dabei in einem Winkel von etwa 90° oder auch kleiner 90° zur Frontkamera angeordnet sein. Dabei werden bevorzugt die Frontaufnahmen und die seitlichen Kopfaufnahmen gleichzeitig aufgenommen, was bewirkt, dass die Kopfhaltung der Person bei diesen Aufnahmen gleich ist. Die Aufnahmen können insbesondere mit getragener Brillenfassung erstellt werden.

Abgesehen von den oben genannten Ergänzungen des Verfahrens kann die Vorrichtung wie in EP A 3355100 beschrieben ausgestaltet sein.

Die Erfindung wird nachfolgend anhand von Ausführungsbeispielen unter Bezugnahme auf die beigefügte Zeichnung näher erläutert. Es zeigen:
Die Figuren 1A und 1B schematische Darstellungen einer Vorrichtung gemäß einem Ausführungsbeispiel,
Figur 2 ein Flussdiagramm eines Verfahrens gemäß einem Ausführungsbeispiel,
Figuren 3-9 verschiedene schematische Darstellungen von Anzeigen während der Durchführung erfindungsgemäßer Verfahren,
Figur 10 ein Flussdiagramm eines Verfahrens gemäß einem Ausführungsbeispiel, und
Figuren 11A und 11B Diagramme zur Veranschaulichung der Korrektur eines Durchblickpunktes in Abhängigkeit von der Kopfneigung.

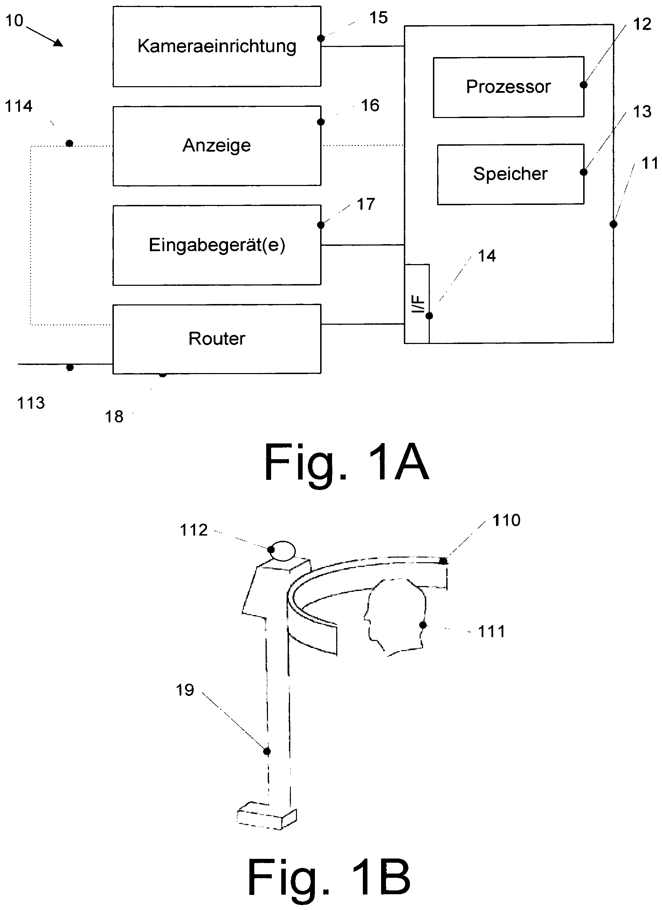

Die Figur 1A zeigt eine Vorrichtung zur Bestimmung von Zentrierparametern gemäß einem Ausführungsbeispiel. Abgesehen von der vorstehend und nachfolgend detaillierter beschriebenen Korrektur auf Basis einer habituellen Kopfhaltung kann die Vorrichtung der Figur 1A einer herkömmlichen Vorrichtung zur Bestimmung von Zentrierparametern entsprechen, insbesondere der in der europäischen Patentanmeldung 17153556.0 offenbarten Vorrichtung. Die Vorrichtung der Figur 1A verfügt über eine Recheneinrichtung 11 mit einem oder mehreren Prozessoren 12 und einem Speicher 13. Der Speicher 13 umfasst einen Nur-Lesespeicher (Read Only Memory; ROM), einen Speicher mit wahlfreiem Zugriff (Random Access Memory; RAM) und/oder Massenspeichergeräte wie Harddisks oder optische Laufwerke. In dem Speicher 13 sind ein oder mehrere Programme gespeichert, die, wenn sie auf dem Prozessor 12 ausgeführt werden, eine Bestimmung von Zentrierparametern einschließlich der oben und im Folgenden beschriebenen Korrekturen auf Basis einer habituellen Kopfhaltung durchführen.

Hierzu wird insbesondere eine Repräsentation des Kopfes wie beschrieben auf einer Anzeige 16 dargestellt. Über ein oder mehrere Eingabegeräte 17, insbesondere Tastatur oder Maus, kann ein Benutzer Eingaben vornehmen. Bei bevorzugten Ausführungsformen ist die Anzeige 16 zudem oder alternativ als berührungsempfindlicher Bildschirm (Touchscreen) ausgestaltet, sodass auch direkt über die Anzeige Eingaben vorgenommen werden können.

Mittels des einen oder mehreren Eingabegeräte 17 können dann manuelle Korrekturen der Kopfhaltung der dargestellten Repräsentation des Kopfes entsprechend der habituellen Kopfhaltung wie oben beschrieben vorgenommen werden, um vorher bestimmte Zentrierparameter dann entsprechend zu korrigieren oder auf Basis der habituellen Kopfhaltung zu bestimmen.

Die Recheneinrichtung 11 weist weiter eine Netzwerkschnittstelle 14 auf, mit welcher Daten über einen Router 18 von einem Netzwerk empfangen oder an das Netzwerk gesendet werden können. Hier können insbesondere korrigierte Zentrierparameter an andere Einrichtungen, welche diese benötigen, gesendet werden. Über den Router kann auch die Anzeige 16 über ein drahtloses Netzwerk statt einer drahtgebundenen Kopplung mit der Recheneinrichtung 11 gekoppelt sein, wie durch eine gepunktete Linie 114 angedeutet. In diesem Fall ist die Anzeige 16 bevorzugt ein Tabletcomputer.

Schließlich umfasst die Vorrichtung der Figur 1A eine Kameraeinrichtung 15. Mit der Kameraeinrichtung 15 werden ein oder mehrere Bilder einer zu untersuchenden Person aufgenommen, wobei die Person dabei eine Brillenfassung trägt, in die Brillengläser einzupassen sind. Auf Basis dieser Bilder werden dann Zentrierparameter bestimmt. Bei diesen Bildaufnahmen kann die Person eine Kopfhaltung einnehmen, die sich von ihrer habituellen Kopfhaltung unterscheidet. Dies kann dann mit den vorstehend und nachfolgend beschriebenen Verfahren korrigiert werden.

Ein Beispiel für eine derartige Kameraeinrichtung 15 ist in Fig. 1B dargestellt. Bei der Kameraeinrichtung der Figur 1B ist an einer Säule 19 ein Bogen 110 angebracht, in dem eine Vielzahl von Kameras angeordnet ist. Mit diesen Kameras können dann Front- und Seitenaufnahmen eines Kopfes 111 einer zu untersuchenden Person erstellt werden.

Die oben erwähnten Kopfrepräsentationen werden dann zunächst entsprechend der Kopfhaltung des Kopfes 111 bei dieser Aufnahme dargestellt. Abweichungen dieser Kopfhaltung von der habituellen Kopfhaltung können dann korrigiert werden.

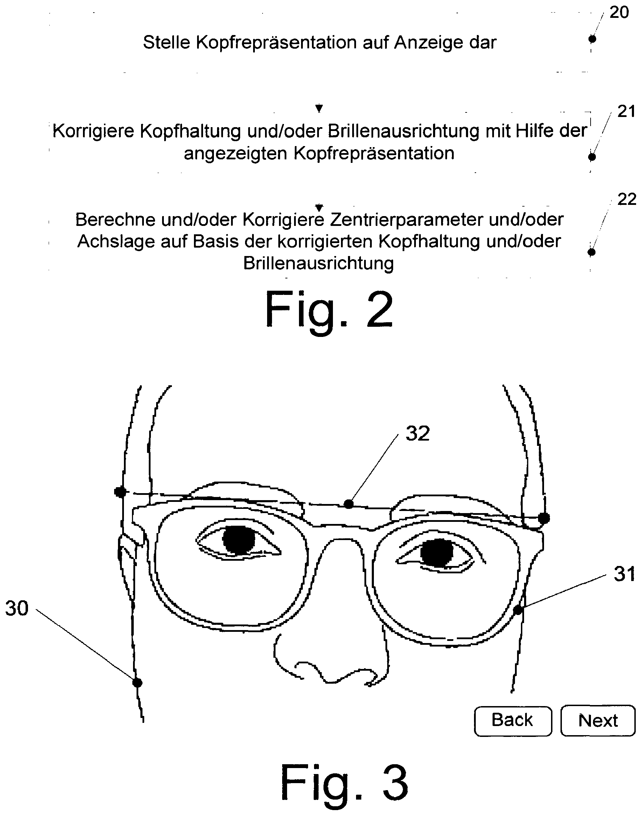

Die Figur 2 zeigt ein Flussdiagramm zur Veranschaulichung eines Verfahrens gemäß einem Ausführungsbeispiel.

Das Verfahren der Figur 2 kann beispielsweise in der Vorrichtung der Figuren 1A und 1B ausgeführt werden, indem der Prozessor 12 mittels eines Computerprogramms entsprechend programmiert wird. Das Verfahren der Figur 2 kann jedoch auch mittels anderer Vorrichtungen durchgeführt werden.

In Schritt 20 der Fig. 2 wird eine Repräsentation des Kopfs auf der Anzeige 16 der Figur 1A dargestellt. Diese Repräsentation des Kopfs zeigt insbesondere die Kopfhaltung bei der Erstellung von Bildern zur Bestimmung von Zentrierparametern, d.h. die Kopfhaltung der Person in der in Figur 1B dargestellten Position.

In Schritt 21 wird die Kopfhaltung mithilfe der dargestellten Repräsentation des Kopfs korrigiert. Insbesondere kann eine vertikale Kopfneigung (nickend nach vorne) und/oder ein seitliches Neigen des Kopfes einer tatsächlichen habituellen Kopfhaltung angepasst werden, wie sie ein Benutzer wie beispielsweise ein Optiker an der Person beobachtet. Zudem kann auch eine Position der Brille, insbesondere eine schiefe Position der Brille, in der dargestellten Repräsentation des Kopfs markiert werden.

In Schritt 22 werden dann Zentrierparameter und/oder eine Achslage einer sphärozylindrischen Refraktion auf Basis der korrigierten Kopfhaltung und/oder der Position der Brille korrigiert.

Beispiele für die Schritte 20-22 der Figur 2 werden nunmehr bezugnehmend auf die Figuren 3-9 näher erläutert.

Die Figuren 3-9 zeigen dabei Darstellungen, wie sie auf der Anzeige 16 der Figur 1A im Zuge der Durchführung des Verfahrens der Figur 2 angezeigt werden können. In den Figuren 3-9 bezeichnen dabei gleiche Bezugszeichen einander entsprechende Elemente, welche nicht mehrmals erläutert werden.

In der Figur 3 ist eine Repräsentation eines Kopfes 30 in einer Frontansicht zusammen mit einer am Kopf 30 getragenen Brillenfassung 31 dargestellt. In diesem Fall ist die Brillenfassung 31 verglichen mit einer Waagerechten seitlich geneigt, was beispielsweise durch eine seitliche Kopfneigung wie im Bild dargestellt oder eine aus anatomischen oder kosmetischen Gründen schräg getragene Brillenfassung verursacht werden kann. Die Richtung der Brillenfassung kann wie dargestellt von einem Benutzer durch eine Linie 32, die die Fassungshorizontale bezeichnet, markiert werden. Eine Achslage, welche für die sphärozylindrische Refraktion der Augen der Personen ermittelt wurde, wird dann bei der dargestellten seitlichen Neigung des Kopfes um einen Winkel korrigiert, der der Abweichung der Linie 32 von der Waagerechten entspricht.

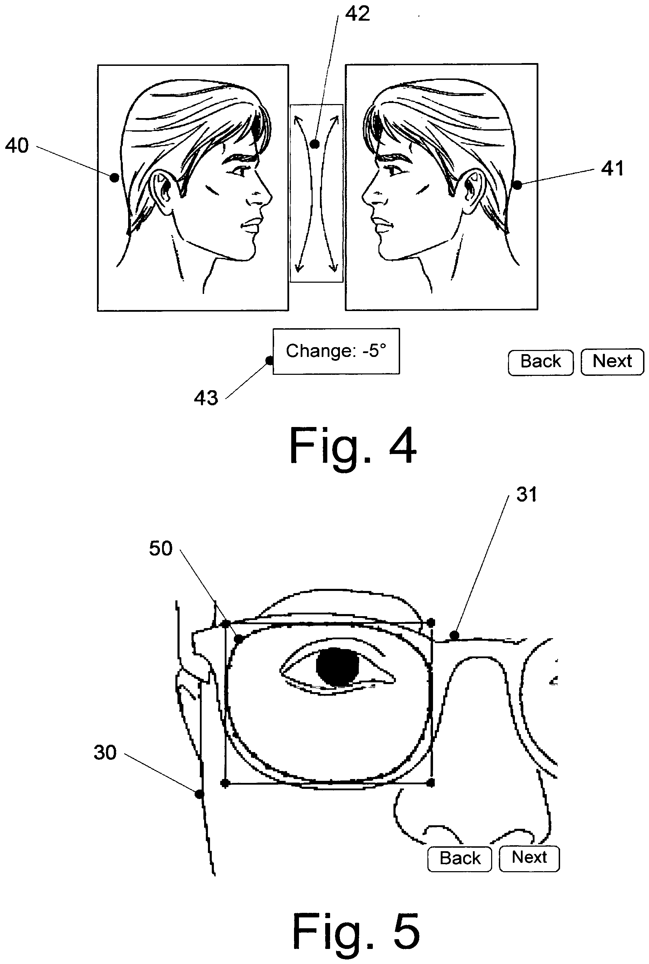

Die Figur 4 zeigt eine Darstellung auf einem Bildschirm, bei welcher zwei Seitenansichten 40, 41 eines Kopfes als Repräsentation des Kopfs dargestellt sind. Die Kopfhaltung der Darstellung der Seitenansichten 40, 41 entspricht der Kopfhaltung des Kopfes 111 bei der Kameraaufnahme mit der Kameraeinrichtung der Figur 1B. Ein Benutzer, beispielsweise Optiker, kann dann durch Wischen in dem Bereich 42 (im Falle eines berührungsempfindlichen Bildschirms) oder durch Bewegen eines Mauszeigers im Bereich 42 die vertikale Kopfneigung ändern, wobei sich die Seitenansichten 40, 41 entsprechend verändern. Auf diese Weise kann die Kopfhaltung leicht einer beobachteten habituellen Kopfhaltung der Person angeglichen werden. Die Veränderung der vertikalen Kopfneigung wird dabei in einem Feld 43 angezeigt. Ist der Benutzer mit dem Ergebnis zufrieden, kann er die Auswahl bestätigen, und dann werden bestimmte Zentrierparameter auf Basis der veränderten dargestellten habituellen Kopfhaltung korrigiert.

Die Figur 5 veranschaulicht einen Schritt bei der Bestimmung von Zentrierparametern. Zur Bestimmung der Zentrierparameter wird dabei ein Fassungsrand 50 der Brillenfassung 31 durch Bilderkennungsverfahren identifiziert. Dies ist beispielsweise in der EP 17153651.9 beschrieben. Durch die Identifizierung des Fassungsrandes 50 ist die Lage des Brillenglases bekannt.. Unter zusätzlicher Kenntnis der Lage der Pupillen können dann Zentrierparameter wie der Fern-Durchblickpunkt bestimmt werden, wobei diese Zentrierparameter auf Basis der beispielsweise wie in Figur 4 korrigierten Kopfhaltung korrigiert werden.

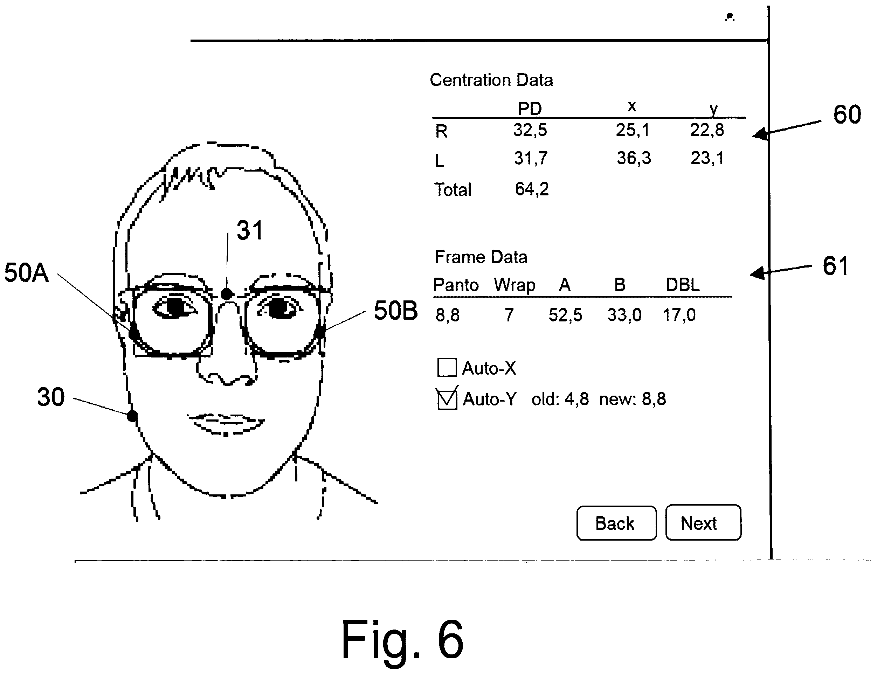

Diese Zentrierparameter werden dann beispielsweise in der in Figur 6 gezeigten Weise angezeigt. Dabei wird der Kopf 30 mit der Brillenfassung 31 in Frontansicht gezeigt, wobei linker und rechter Fassungsrand 50A, 50B markiert sind. In einem Feld 60 werden Zentrierparameter angegeben, und in einem Feld 61 Daten bezüglich der Brillenfassung. Mittels eines Feldes "Auto-y" kann zwischen einer Angabe der unkorrigierten Zentrierparameter und einer Angabe der durch die hier beschriebenen Verfahren korrigierten Parameter ausgewählt werden.

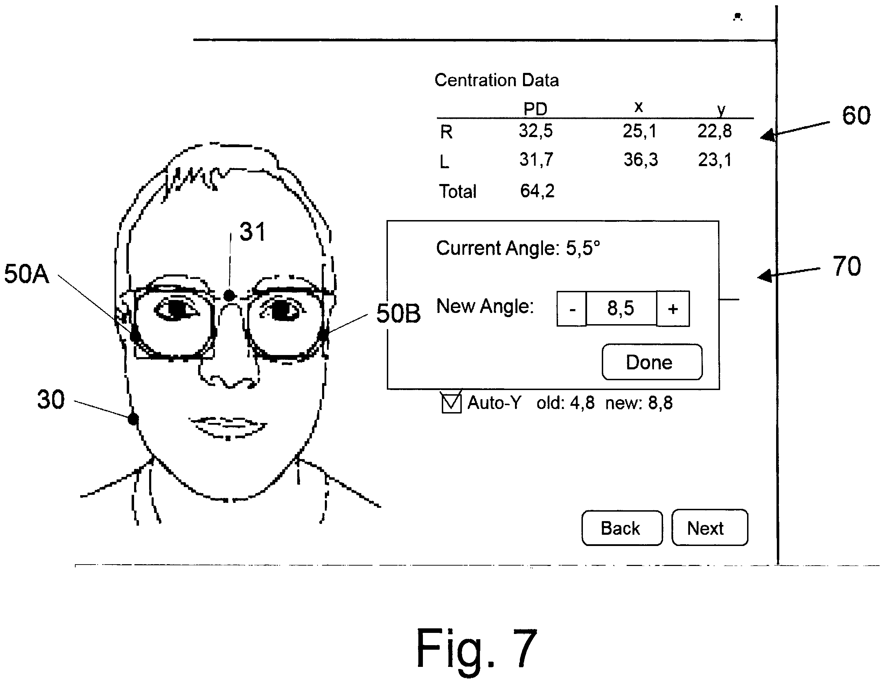

Bei der Herangehensweise der Figuren 4-6 wird zunächst in Figur 4 die angezeigte Kopfhaltung derart korrigiert, dass sie der habituellen Kopfhaltung entspricht, bevor in Fig. 6 die Zentrierdaten (korrigiert entsprechend der habituellen Kopfhaltung) dargestellt werden. Zusätzlich oder alternativ kann die angezeigte Kopfneigung auch im Nachhinein verstellt werden, wie dies in Fig. 7 gezeigt ist. Hier kann in einem Feld 70 die Kopfneigung, d.h. die vertikale Kopfneigung, verstellt werden, was wiederum durch die Darstellung des Kopfes 30 als Repräsentation des Kopfs unmittelbar kontrolliert werden kann. Die Zentrierdaten im Feld 60 werden dann entsprechend korrigiert.

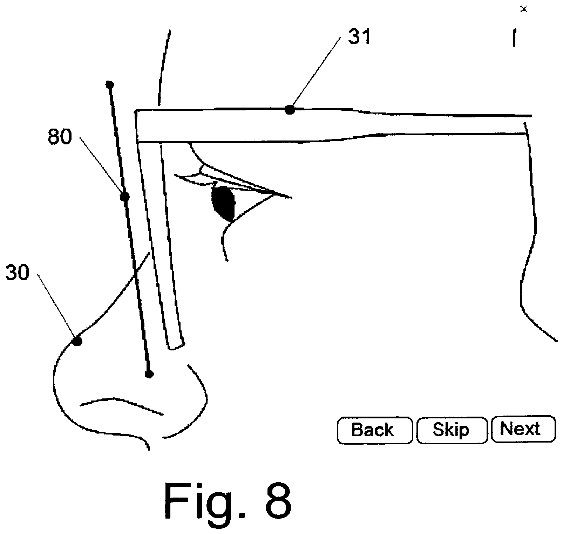

Auch kann der pantoskopische Winkel der Brillenfassung, (vergleiche Abschnitt 5.18 in der DIN EN ISO 13666:2012) eingestellt werden. Dies ist in Figur 8 noch genauer gezeigt, wobei die Vorneigung der Brillenfassung 31 mittels einer Linie 80 markiert und somit eingestellt werden kann. Der pantoskopische Winkel hängt dabei unter anderem von der vertikalen Neigung des Kopfes ab. Somit kann die vertikale Kopfneigung auch über eine Änderung des pantoskopischen Winkels eingestellt werden.

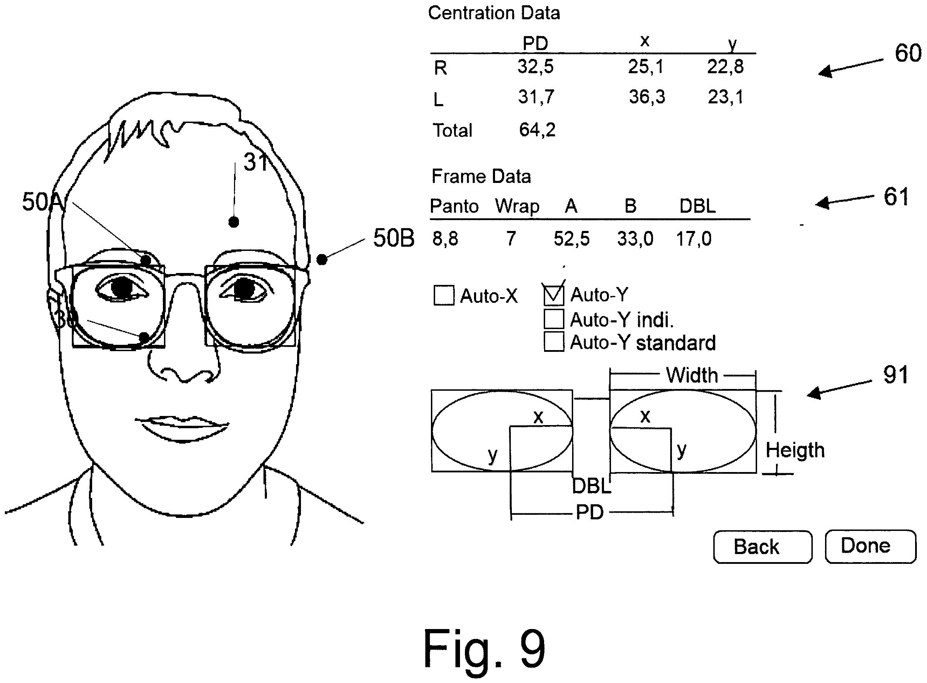

Figur 9 zeigt eine alternative Bildschirmdarstellung, bei welcher neben den Zentrierdaten 60 und den Fassungsdaten 61 die Zentrierparameter in einem Feld 91 grafisch dargestellt sind. Zudem kann bei der Ausführungsform der Figur 9 durch einen Haken "Auto Y" auf "90" eingestellt werden, ob eine Korrektur der angezeigten Kopfneigung durchgeführt werden soll oder ob nur eine automatische Bestimmung der Zentrierparameter ohne eine derartige Korrektur erfolgt. Letzteres kann automatisch oder manuell eingestellt werden, wenn der Benutzer zuvor keine Veränderung an der vertikalen Kopfneigung des Probanden vorgenommen hat, weil der Kopf der Person bei der Bildaufnahme wie in Figur 1B bereits die korrekte, nämlich insbesondere die habituelle Kopfhaltung eingenommen hat.

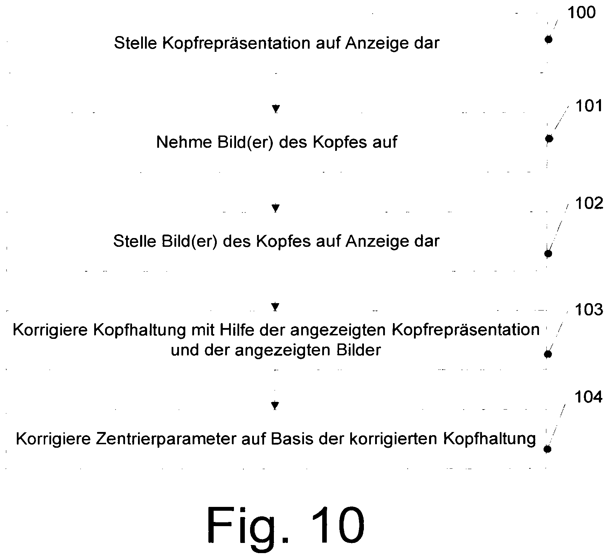

Die Figur 10 zeigt ein Flussdiagramm eines Verfahrens gemäß einem weiteren Ausführungsbeispiel. Wie das Verfahren der Figur 2 kann auch das Verfahren der Figur 10 mittels der Vorrichtung der Figur 1A und 1B durchgeführt werden, wobei in diesem Fall die Kameraeinrichtung 15 eine zusätzliche Kamera (beispielsweise eine Kamera eines Smartphones) umfasst, mittels derer ein oder mehrere Bilder, insbesondere als Video, der Person aufgenommen werden können.

In Schritt 100 des Verfahrens der Figur 10 wird eine Repräsentation des Kopfs auf einer Anzeige dargestellt, wie bereits beschrieben. Zudem werden in Schritt 101 ein oder mehrere Bilder, insbesondere Livebilder (d.h. momentane Bilder), des Kopfes aufgenommen. Diese Livebilder nehmen die Person mit ihrer tatsächlichen Kopfhaltung auf, die der habituellen Kopfhaltung entspricht, optional für verschiedene Tätigkeiten wie bereits oben beschrieben. In Schritt 102 werden die in Schritt 101 aufgenommenen Bilder auf der Anzeige dargestellt, sodass die Repräsentation des Kopfs den aufgenommenen Bildern angeglichen werden kann. Dies erleichtert die Einstellung, welche beispielsweise unter Bezugnahme auf die Figur 4 beschrieben wurde, zusätzlich. Alternativ oder zusätzlich kann in Schritt 103 eine automatische Anpassung durch Identifizierung von markanten Punkten erfolgen, wie ebenfalls oben beschrieben. In Schritt 104 werden dann Zentrierparameter auf Basis der korrigierten Kopfhaltung korrigiert, wie bereits beschrieben.

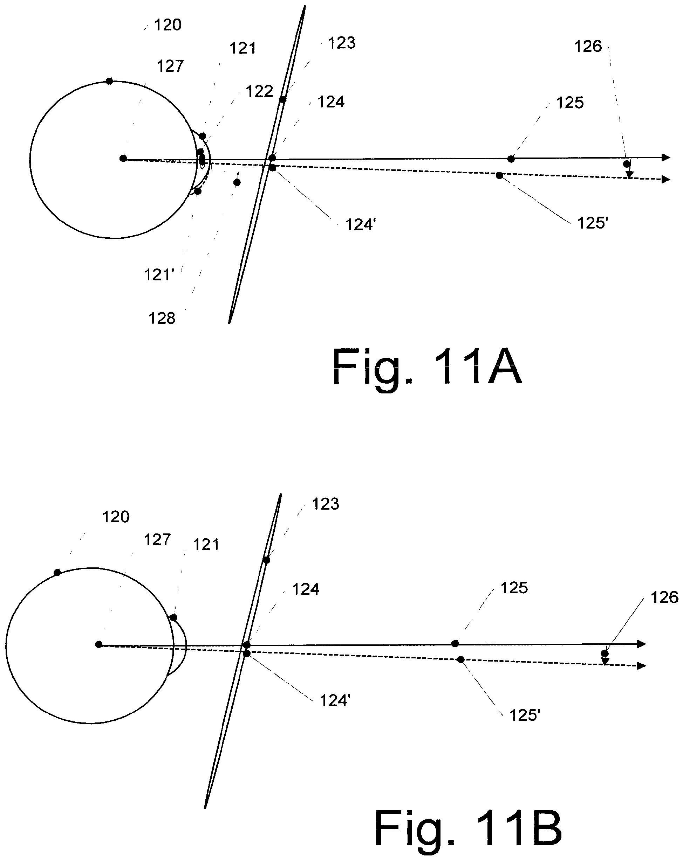

Ein Beispiel für diese Korrektur von Zentrierparametern ist in den Figuren 11A und 11B für die Korrektur des Durchblickpunktes dargestellt, wobei die Figur 11B ein in Vergleich zu der Figur 11A ein vereinfachtes Modell zeigt.

In den Figuren 11A und 11B ist jeweils schematisch ein Auge 120 mit einer Cornea (Hornhaut) 121 dargestellt. In Fig. 11A ist zusätzlich noch eine Pupille 122 des Auges 120 dargestellt. Mit dem Bezugszeichen 127 ist der Drehpunkt (COR, Center of Rotation) des Auges 120 bezeichnet. Der Augendrehpunkt 127 liegt typischerweise 11-15 mm, z.B. 12,5 mm hinter der Cornea 127. Statt des Augendrehpunktes kann auch der geometrische Augenmittelpunkt verwendet werden, der näherungsweise mit dem Augendrehpunkt übereinstimmt.

Zudem ist in den Figuren 11A und 11B ein Brillenglas 123 dargestellt, durch welches das Auge 120 blickt. Mit dem Bezugszeichen 125 ist dabei eine Blickrichtung bei der Bestimmung der Zentrierparameter bezeichnet, die zu einem Durchblickpunkt 124 führt. Das Bezugszeichen 125' bezeichnet eine um einen Korrekturwinkel 126 der Person korrigierten Blickrichtung. Dieser Korrekturwinkel wurde wie oben beschrieben entsprechend einer Korrektur der Kopfneigung bestimmt. In der Fig. 11A ist zusätzlich eine veränderte Lage der Cornea entsprechend der Blickrichtung 125' mit 121' bezeichnet. Diese Blickrichtung 125' ist dann entsprechend ein korrigierter Durchblickpunkt 124' als Beispiel für einen korrigierten Zentrierparameter zugeordnet.

Die Ebene des Brillenglases 123 wird während der Bestimmung der Zentrierparameter wie in der EP A 3355104 beschrieben bestimmt.

Bei der Herangehensweise der Fig. 11A wird die 3-dimensionale Position des Durchblickpunktes 124' als Schnitt zwischen der Blickrichtung 125' und dieser Ebene bestimmt. Die zweidimensionale Verschiebung des Durchblickpunktes von 124 zu 124' kann aus der Entfernung des Augendrehpunktes 127 zum Durchblickpunkt 124, welche den Hornhautscheitelabstand 128 enthält, dem Korrekturwinkel 126 und der Vorneigung des Brillenglases 123 durch einfache geometrische Berechnungen wie aus der Fig. 11A ersichtlich bestimmt werden. Der Hornhautscheitelabstand 128 wird bei der Bestimmung der Zentrierparameter bestimmt.

Bei der Figur 11B wird die Blickrichtung 125 bei der Bestimmung der Zentrierparameter durch ein sogenanntes Einblicktarget an der entsprechenden Vorrichtung wie der in Fig. 1B gezeigten Vorrichtung festgelegt. Unter Einblicktarget versteht man eine Komponente, auf die die Person während der Bestimmung der Zentrierparameter blicken soll. Der Durchblickpunkt 124 ergibt sich dann wiederum aus dem Schnitt dieser Blickrichtung 125 mit der Ebene des Brillenglases 123, und der korrigierte Durchblickpunkt 124' wird dann durch Änderung dieser Blickrichtung 125 gemäß dem eingestellten Korrekturwinkel 126 zu der Blickrichtung 125' und Schnitt dieser Blickrichtung 125' mit der Ebene des Brillenglases 123 bestimmt.

## Patentansprüche

1. Computerimplementiertes Verfahren zur Korrektur eines Brillenparameters, umfassend:
- Darstellen (20) einer Repräsentation (30; 40, 41) des Kopfs in einer Kopfhaltung oder einer Repräsentation des Kopfs mit einer Brillenfassung in einer Brillenfassungsausrichtung (32), und
- Korrigieren (22) des Brillenparameters auf Basis einer korrigierten Kopfhaltung und/oder auf Basis einer korrigierten Brillenfassungsausrichtung,
**dadurch gekennzeichnet, dass** die korrigierte Kopfhaltung und/oder die korrigierte Brillenfassungsausrichtung bestimmt wird durch:
- zumindest teilweise manuelles Korrigieren (21) der Kopfhaltung in der dargestellten Repräsentation (30; 40, 41) des Kopfs und/oder der Brillenfassungsausrichtung (32) in der dargestellten Repräsentation (30; 40, 41) des Kopfs mit der Brillenfassung, und
dass der Brillenparameter eine Achslage einer sphärozylindrischen Refraktion umfasst.

2. Verfahren nach Anspruch 1, **dadurch gekennzeichnet, dass** der Brillenparameter einen Zentrierparameter umfasst.

3. Verfahren nach Anspruch 1 oder 2, **dadurch gekennzeichnet, dass**
- die dargestellte Repräsentation (30; 40, 41) des Kopfs die Kopfhaltung bei einer Aufnahme zur Bestimmung des Zentrierparameters oder bei dem Bestimmen der sphärozylindrischen Refraktion anzeigt und/oder
- die dargestellte Repräsentation des Kopfs mit der Brillenfassung die Brillenfassungsausrichtung (32) bei einer Aufnahme zur Bestimmung von Zentrierparametern oder in einer Kopfhaltung bei dem Bestimmen einer sphärozylindrischen Refraktion anzeigt

4. Verfahren nach einem der Ansprüche 1-3, **dadurch gekennzeichnet, dass** das Darstellen (20) der Repräsentation des Kopfs zumindest eines aus der folgenden Gruppe umfasst:
- ein Darstellen mindestens einer Seitenansicht (40, 41) des Kopfes, wobei das Korrigieren der Kopfhaltung ein Verstellen einer vertikalen Kopfneigung der mindestens einen Seitenansicht (40, 41) umfasst,
- ein Darstellen einer 3D-Kopf Repräsentationen, wobei das Korrigieren der Kopfhaltung ein Ausrichten der dargestellten 3D-Repräsentation umfasst,
- ein Darstellen einer Frontansicht (30) des Kopfes, wobei das Korrigieren der Kopfhaltung ein Einstellen einer seitlichen Neigung des Kopfes umfasst,
- ein Darstellen einer Frontansicht (30) des Kopfes mit aufgesetzter Brillenfassung (31), wobei das Korrigieren der Brillenfassungsausrichtung (31) ein Markieren (32) der Brillenfassungsausrichtung in der dargestellten Repräsentation des Kopfs umfasst.

5. Verfahren nach Anspruch 4 **dadurch gekennzeichnet, dass** der Brillenparameter eine Achslage einer sphärozylindrischen Refraktion umfasst, und dass das Korrigieren ein Korrigieren der Achslage entsprechend der seitlichen Kopfneigung und/oder der markierten Brillenfassungsausrichtung umfasst.

6. Verfahren nach einem der Ansprüche 1-5, **dadurch gekennzeichnet, dass** das Korrigieren (22) der Kopfhaltung eine Eingabe eines die Kopfhaltung kennzeichnenden Winkels umfasst, wobei das Verfahren weiter umfasst:
Ändern der Darstellung der Repräsentation des Kopfs (30; 40, 41) in Abhängigkeit von dem eingegebenen Winkel.

7. Verfahren nach einem der Ansprüche 1-6, **dadurch gekennzeichnet, dass** das Verfahren weiter ein Aufnehmen (101) mindestens eines Bildes der Person umfasst, wobei das Korrigieren der Kopfhaltung auf Basis des mindestens einen Bildes und der Repräsentation des Kopfs vorgenommen wird.

8. Verfahren nach Anspruch 7, **dadurch gekennzeichnet, dass** das Korrigieren der Kopfhaltung ein Identifizieren von einander entsprechenden Punkten in dem mindestens einen Bild und in der Repräsentation des Kopfs umfasst.

9. Verfahren nach einem der Ansprüche 1-8, wobei der Brillenparameter eine Achslage einer sphärozylindrischen Refraktion umfasst, und wobei das Korrigieren der Achslage auf Basis einer Registrierung der Iriden der Augen in einem Bild des Kopfes bei einer Bestimmung der sphärozyklischen Refraktion und den Iriden der Augen in einem Bild des Kopfes bei einer Zentrierparametermessung erfolgt.

10. Computerprogramm mit einem Programmcode, welcher, wenn er auf einem Prozessor (12) ausgeführt wird, bewirkt, dass das Verfahren nach einem der Ansprüche 1-9 durchgeführt wird.

11. Computer (10) zur Korrektur eines Brillenparameters, umfassend:
einen Prozessor (12), und
einen Speicher (13) mit einem darin gespeicherten Computerprogramm nach Anspruch 10 zur Ausführung auf dem Prozessor (12).

12. Vorrichtung zur Korrektur eines Brillenparameters, umfassend:
- Anzeigemittel (16) zum Darstellen (20) einer Repräsentation (30; 40, 41) eines Kopfs in einer Kopfhaltung oder einer Repräsentation des Kopfs mit einer Brillenfassung in einer Brillenfassungsausrichtung (32), und
- Korrekturmittel (12) zum Korrigieren (22) des Brillenparameters auf Basis einer korrigierten Kopfhaltung und/oder auf Basis einer korrigierten Brillenfassungsausrichtung, **gekennzeichnet durch** Eingabemittel (17) zum Bestimmen der korrigierten Kopfhaltung und/oder der korrigierte Brillenfassungsausrichtung **durch**:
- zumindest teilweises manuelles Korrigieren (21) der Kopfhaltung in der dargestellten Repräsentation (30; 40, 41) des Kopfs und/oder der Brillenfassungsausrichtung (32) in der dargestellten Repräsentation (30; 40, 41) des Kopfs mit der Brillenfassung, und
**dadurch** gekennzeichnet, dass der Brillenparameter eine Achslage einer sphärozylindrischen Refraktion umfasst.

13. Vorrichtung (10) nach Anspruch 12, wobei die Korrekturmittel einen Prozessor (12) umfassen, und
die Vorrichtung des Weiteren ein Computerprogramm nach Anspruch 11 zur Ausführung auf dem Prozessor (12) umfasst.

14. Vorrichtung (10) nach Anspruch 12 oder 13, **dadurch gekennzeichnet, dass** die Vorrichtung weiter eine Bildaufnahmeeinrichtung (15) zur Aufnahme eines oder mehrerer Zentrierbilder zur Bestimmung von Zentrierparametern umfasst, wobei die Repräsentation des Kopfs in Abhängigkeit von den ein oder mehreren Zentrierbildern dargestellt wird.

15. Vorrichtung nach Anspruch 14, **dadurch gekennzeichnet, dass** die Bildaufnahmeeinrichtung (15) eine Frontkamera und mindestens eine Seitenkamera umfasst, wobei die Frontkamera und die mindestens eine Seitenkamera eingerichtet sind, gleichzeitig Bildaufnahmen des Kopfs aufzunehmen.

## Claims

1. Computer-implemented method for correcting a spectacle parameter, comprising:
- displaying (20) a representation (30; 40, 41) of the head in a head posture or a representation of the head with a spectacle frame in a spectacle frame alignment (32), and
- correcting (22) the spectacle parameter on the basis of a corrected head posture and/or on the basis of a corrected spectacle frame alignment,
**characterized in that** the corrected head posture and/or the corrected spectacle frame alignment is determined by:
- an at least partly manual correction (21) of the head posture in the displayed representation (30; 40, 41) of the head and/or of the spectacle frame alignment (32) in the displayed representation (30; 40, 41) of the head with the spectacle frame, and
**in that** the spectacle parameter comprises an axis position of a spherocylindrical refraction.

2. Method according to Claim 1, **characterized in that** the spectacle parameter comprises a centration parameter.

3. Method according to Claim 1 or 2, **characterized in that**
- the displayed representation (30; 40, 41) of the head indicates the head posture in a recording for determining the centration parameter or when determining the spherocylindrical refraction and/or
- the displayed representation of the head with the spectacle frame indicates the spectacle frame alignment (32) in a recording for determining centration parameters or in a head posture when determining a spherocylindrical refraction.

4. Method according to any one of Claims 1-3, **characterized in that** the display (20) of the representation of the head comprises at least one of the following group:
- comprises a display of at least one side view (40, 41) of the head, wherein the correction of the head posture comprises an adjustment of a vertical head inclination of the at least one side view (40, 41),
- comprises a display of a 3-D head representation, wherein the correction of the head posture comprises an alignment of the displayed 3-D representation,
- comprises a display of a front view (30) of the head, wherein the correction of the head posture comprises setting a lateral inclination of the head,
- comprises a display of a front view (30) of the head when wearing a spectacle frame (31), wherein the correction of the spectacle frame alignment (31) comprises a marking (32) of the spectacle frame alignment in the illustrated representation of the head.

5. Method according to Claim 4, **characterized in that** the spectacle parameter comprises an axis position for spherocylindrical refraction and **in that** the correction comprises a correction of the axis position in accordance with the lateral head inclination and/or the marked spectacle frame alignment.

6. Method according to any one of Claims 1-5, **characterized in that** the correction (22) of the head posture comprises an input of an angle characterizing the head posture, wherein the method further comprises:
changing the display of the representation of the head (30; 40, 41) depending on the entered angle.

7. Method according to any one of Claims 1-6, **characterized in that** the method further comprises recording (101) at least one image of the person, wherein the correction of the head posture is undertaken on the basis of the at least one image and the representation of the head.

8. Method according to Claim 7, **characterized in that** the correction of the head posture comprises an identification of points in the at least one image and in the representation of the head that correspond to one another.

9. Method according to any one of Claims 1-8, wherein the spectacle parameter comprises an axis position of a spherocylindrical refraction and wherein the correction of the axis position comprises on the basis of a registration of the irises of the eye in an image of the head when determining the spherocylindrical refraction and the irises of the eyes in an image of the head in a centration parameter measurement.

10. Computer program having a program code which, when executed on a processor (12), causes the method according to any one of Claims 1-9 to be carried out.

11. Computer (10) for correcting a spectacle parameter, comprising:
a processor (12) and
a memory (13) with a computer program according to Claim 10 that is stored therein and should executed be on a processor (12).

12. Apparatus for correcting a spectacle parameter, comprising:
- display means (16) for displaying (20) a representation (30; 40, 41) of a head in a head posture or a representation of the head with a spectacle frame in a spectacle frame alignment (32), and
- correction means (12) for correcting (22) the spectacle parameter on the basis of a corrected head posture and/or on the basis of a corrected spectacle frame alignment,
**characterized by** input means (17) for determining the corrected head posture and/or the corrected spectacle frame alignment by:
- an at least partly manual correction (21) of the head posture in the displayed representation (30; 40, 41) of the head and/or of the spectacle frame alignment (32) in the displayed representation (30; 40, 41) of the head with the spectacle frame, and
**characterized in that** the spectacle parameter comprises an axis position of a spherocylindrical refraction.

13. Apparatus (10) according to Claim 12, wherein the correction means comprise a processor (12) and
the apparatus furthermore comprises a computer program according to Claim 11 to be carried out on the processor (12).

14. Apparatus (10) according to Claim 12 or 13, **characterized in that** the apparatus further comprises an image recording device (15) for recording one or more centration images for determining centration parameters, wherein the representation of the head is displayed depending on the one or more centration images.

15. Apparatus according to Claim 14, **characterized in that** the image recording device (15) comprises a front camera and at least one side camera, wherein the front camera and the at least one side camera are configured to record image recordings of the head at the same time.

## Revendications

1. Procédé mis en œuvre par ordinateur pour corriger un paramètre de lunettes, comprenant :
- l'affichage (20) d'une représentation (30 ; 40, 41) de la tête dans une posture de tête ou d'une représentation de la tête avec une monture de lunettes dans une orientation de monture de lunettes (32), et
- la correction (22) du paramètre de lunettes sur la base d'une posture de tête corrigée et/ou d'une orientation de monture de lunettes corrigée,
**caractérisé en ce que** la position corrigée de la tête et/ou l'orientation corrigée de la monture de lunettes sont déterminées par :
- la correction au moins partiellement manuelle (21) de la position de la tête dans la représentation affichée (30 ; 40, 41) de la tête et/ou de l'orientation de la monture de lunettes (32) dans la représentation affichée (30 ; 40, 41) de la tête avec la monture de lunettes, et **en ce que** le paramètre de lunettes comprend une position axiale d'une réfraction sphérocylindrique.

2. Procédé selon la revendication 1, **caractérisé en ce que** le paramètre de lunettes comprend un paramètre de centrage.

3. Procédé selon la revendication 1 ou 2, **caractérisé en ce que**
- la représentation affichée (30 ; 40, 41) de la tête indique la posture de tête lors d'une acquisition destinée à déterminer le paramètre de centrage ou lors de la détermination de la réfraction sphérocylindrique, et/ou
- la représentation affichée de la tête avec la monture de lunettes indique l'orientation de la monture de lunettes (32) lors d'une acquisition destinée à déterminer des paramètres de centrage ou dans une posture de tête lors de la détermination d'une réfraction sphérocylindrique.

4. Procédé selon l'une des revendications 1-3, **caractérisé en ce que** l'affichage (20) de la représentation de la tête comprend au moins l'un des éléments du groupe suivant :
- comprend un affichage d'au moins une vue latérale (40, 41) de la tête,
dans lequel la correction de la posture de tête comprend un réglage d'une inclinaison verticale de la tête de ladite au moins une vue latérale (40, 41),
- comprend un affichage d'une représentation 3D de la tête, dans lequel la correction de la posture de tête comprend l'orientation de la représentation 3D affichée,
- comprend un affichage d'une vue de face (30) de la tête, dans lequel la correction de la posture de tête comprend un réglage d'une inclinaison latérale de la tête,
- comprend l'affichage d'une vue de face (30) de la tête avec une monture de lunettes (31) mise en place, dans lequel la correction de l'orientation de la monture de lunettes (31) comprend un marquage (32) de l'orientation de la monture de lunettes dans la représentation affichée de la tête.

5. Procédé selon la revendication 4, **caractérisé en ce que** le paramètre de lunettes comprend une position axiale d'une réfraction sphérocylindrique, et **en ce que** la correction comprend une correction de la position axiale en fonction de l'inclinaison latérale de la tête et/ou de l'orientation marquée de la monture de lunettes.

6. Procédé selon l'une quelconque des revendications 1 à 5, **caractérisé en ce que** la correction (22) de la position de la tête comprend une saisie d'un angle caractérisant la posture de tête, dans lequel le procédé comprend en outre :
la modification de l'affichage de la représentation de la tête (30 ; 40, 41) en fonction de l'angle saisi.

7. Procédé selon l'une des revendications 1 à 6, **caractérisé en ce que** le procédé comprend en outre une acquisition (101) d'au moins une image de la personne, dans lequel la correction de la posture de tête est effectuée sur la base de ladite au moins une image et de la représentation de la tête.

8. Procédé selon la revendication 7, **caractérisé en ce que** la correction de la posture de tête comprend une identification de points se correspondant mutuellement dans ladite au moins une image et dans la représentation de la tête.

9. Procédé selon l'une des revendications 1-8, dans lequel le paramètre de lunettes comprend une position axiale d'une réfraction sphérocylindrique et dans lequel la correction de la position axiale comprend, sur la base d'un alignement des iris des yeux dans une image de la tête, lors d'une détermination de la réfraction sphérocylindrique, et les iris des yeux dans une image de la tête lors d'une mesure de paramètres de centrage.

10. Programme d'ordinateur ayant un code de programme qui, lorsqu'il est exécuté sur un processeur (12), provoque la mise en œuvre du procédé selon l'une quelconque des revendications 1-9.

11. Ordinateur (10) destiné à corriger un paramètre de lunettes, comprenant :
un processeur (12) et
une mémoire (13) dans laquelle est stocké un programme informatique selon la revendication 10 pour son exécution sur le processeur (12).

12. Appareil destiné à corriger un paramètre de lunettes, comprenant :
- un moyen d'affichage (16) destiné à afficher (20) une représentation (30 ; 40, 41) d'une tête dans une posture de tête ou une représentation de la tête avec une monture de lunettes dans une orientation de monture de lunettes (32), et
- des moyens de correction (12) destinés à corriger (22) le paramètre de lunettes sur la base d'une posture de tête corrigée et/ou sur la base d'une orientation de monture de lunettes corrigée, **caractérisé par** des moyens de saisie (17) permettant de déterminer la posture de tête corrigée et/ou l'orientation corrigée de la monture de lunettes en effectuant :
- la correction au moins partiellement manuelle (21) de la posture de tête dans la représentation affichée (30 ; 40, 41) de la tête et/ou de la monture de lunettes (32) dans la représentation affichée (30 ; 40, 41) de la tête avec la monture de lunettes, et
**caractérisé en ce que** le paramètre de lunettes comprend une position axiale d'une réfraction sphérocylindrique.

13. Dispositif (10) selon la revendication 12, dans lequel le moyen de correction comprend un processeur (12) et
le dispositif comprend en outre un programme informatique selon la revendication 11 destiné à être exécuté sur le processeur (12).

14. Dispositif (10) selon la revendication 12 ou 13, **caractérisé en ce que** le dispositif comprend en outre un dispositif d'acquisition d'images (15) destiné à acquérir une ou plusieurs images de centrage pour déterminer des paramètres de centrage, dans lequel la représentation de la tête est affichée en fonction desdites une ou plusieurs images de centrage.

15. Dispositif selon la revendication 14, **caractérisé en ce que** le dispositif d'acquisition d'images (15) comprend une caméra avant et au moins une caméra latérale, dans lequel la caméra avant et ladite au moins une caméra latérale sont agencées de manière à acquérir simultanément des images de la tête.
